# EUROPEAN PATENT APPLICATION

(11) **EP 4 152 753 A1**
(43) Date of publication of application: **22.03.2023**
(21) Application number: 22193276.7
(22) Date of filing: 31.08.2022
(51) Int. Cl.: H04N 19/533, H04N 19/557

(54) **MOTION SEARCH METHOD AND APPARATUS, ELECTRONIC DEVICE AND STORAGE MEDIUM**

(30) Priority: 15.09.2021 CN 202111080267
(71) Applicant: BEIJING BAIDU NETCOM SCIENCE AND TECHNOLOGY CO. LTD., 100085 Beijing (CN)
(72) Inventor: ZHANG, Xu, Beijing, 100085 (CN); DING, Wenpeng, Beijing, 100085 (CN)
(74) Representative: dompatent von Kreisler Selting Werner - Partnerschaft von Patent- und Rechtsanwälten mbB

(57) **Abstract**

The present disclosure provides a motion search method and apparatus, an electronic device and a storage medium, and relates to the field of artificial intelligence such as computer vision and cloud computing. The method may include: performing a first diamond search according to an initial point determined from points in a search window, a search step size being incremented by i^{th} power of 2, i being a natural number, 0≤i≤N; and performing the following first processing: acquiring an updated initial point and an optimization range, the optimization range being less than 2*^{N}* ; performing a second diamond search according to the initial point, wherein, prior to a search with a search step size larger than the optimization range, if it is determined that an ending condition is met, the diamond search is ended and a corresponding second optimal point is determined; and determining a required optimal motion vector according to the second optimal point if the second optimal point meets a predetermined requirement, and otherwise, repeating the first processing. The efficiency of search can be improved by use of the solutions according to the present disclosure.

## Description

### Field of the Disclosure

The present disclosure relates to the field of artificial intelligence technologies, and in particular to a motion search method and apparatus, an electronic device and a storage medium, and relates to the fields such as computer vision and cloud computing.

### Background of the Disclosure

In a High Efficiency Video Coding (HEVC) technology, motion search (or motion estimation) accounts for about 40% to 50% of the total coding time, or even higher.

Two search manners are generally adopted in the HEVC, of which one is a full search manner and the other is a fast search manner. In the full search manner, there is a need to calculate all points in a search window, so its complexity is very high. In practical applications, the fast search manner, such as a TZSearch algorithm, is generally adopted.

The realization of the TZSearch algorithm involves many diamond searches. During each diamond search, a search step size is incremented by i^{th} power of 2, where i is a natural number, 0≤i≤N, and N is a positive integer greater than 1. That is, each diamond search is required to be performed N times to obtain a found optimal point.

Analysis shows that there are a lot of redundant searches and excessive search points in the above processing manner, resulting in low search efficiency.

### Summary of the Disclosure

The present disclosure provides a motion search method and apparatus, an electronic device and a storage medium..

A motion search method, including:
performing a first diamond search according to an initial point determined from points in a search window, a search step size being incremented by i^{th} power of 2, i being a natural number, 0≤i≤N, and N being a positive integer greater than 1; and
performing the following first processing: acquiring an updated initial point, and acquiring an optimization range, the optimization range being less than 2*^{N}* ; performing a second diamond search according to the initial point, wherein, prior to a search with a search step size larger than the optimization range, if it is determined that a predetermined ending condition is met, the diamond search is ended and a second optimal point corresponding to the diamond search is determined; and determining a required optimal motion vector according to the second optimal point if the second optimal point meets a predetermined requirement, and otherwise, repeating the first processing.
A motion search apparatus, including: a first processing module and a second processing module;
the first processing module being configured to perform a first diamond search according to an initial point determined from points in a search window, a search step size being incremented by i^{th} power of 2, i being a natural number, 0≤i≤N, and N being a positive integer greater than 1; and
the second processing module being configured to perform the following first processing: acquiring an updated initial point, and acquiring an optimization range, the optimization range being less than 2*^{N}* ; performing a second diamond search according to the initial point, wherein prior to a search with a search step size larger than the optimization range, if it is determined that a predetermined ending condition is met, the diamond search is ended and a second optimal point corresponding to the diamond search is determined; and determine a required optimal motion vector according to the second optimal point if the second optimal point meets a predetermined requirement, and otherwise, repeat the first processing.

An electronic device, including:
at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, comprising computer programs/instructions, wherein, when the computer programs/instructions are executed by a processor, the method as described above is performed.

One embodiment in the above disclosure has the following advantages or beneficial effects. An optimization range may be set to end a diamond search in advance when a predetermined condition is met, thereby reducing redundant searches. That is, the number of search points is reduced, and then the efficiency of search is improved.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a flowchart of an embodiment of a motion search method according to the present disclosure;
FIG. 2 is a schematic template diagram of a diamond search according to the present disclosure;
FIG. 3 is a schematic template diagram of a two-point search according to the present disclosure;
FIG. 4 is a flowchart of an overall implementation process of the motion search according to the present disclosure;
FIG. 5 is a schematic diagram of a composition structure of an embodiment of a motion search apparatus 500 according to the present disclosure; and
FIG. 6 is a schematic block diagram of an electronic device 600 configured to implement embodiments of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it is to be understood that the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

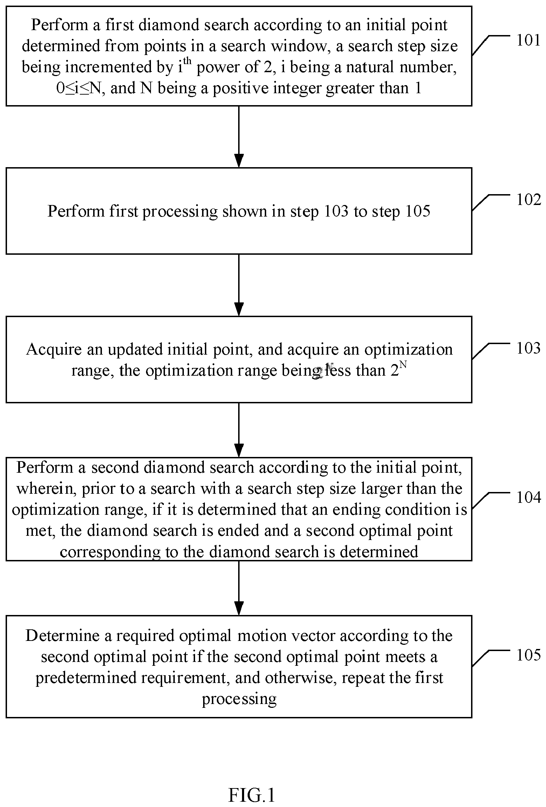

FIG. 1 is a flowchart of an embodiment of a motion search method according to the present disclosure. As shown in FIG. 1, the following specific implementations are included.

In step 101, a first diamond search is performed according to an initial point determined from points in a search window, a search step size being incremented by i^{th} power of 2, i being a natural number, 0≤i≤N, and N being a positive integer greater than 1.

In step 102, first processing shown in step 103 to step 105 is performed.

In step 103, an updated initial point is acquired, and an optimization range is acquired, the optimization range being less than 2*^{N}* .

In step 104, a second diamond search is performed according to the initial point, wherein, prior to a search with a search step size larger than the optimization range, if it is determined that an ending condition is met, the diamond search is ended and a second optimal point corresponding to the diamond search is determined.

In step 105, a required optimal motion vector is determined according to the second optimal point if the second optimal point meets a predetermined requirement, and otherwise, the first processing is repeated.

As can be seen, in the solution of the method embodiment, an optimization range may be set to end a diamond search in advance when a predetermined condition is met, thereby reducing redundant searches. That is, the number of search points is reduced, and then the efficiency of search is improved.

How to determine the initial point from the points in the search window is not limited. For example, the initial point may be determined through an Advanced Motion Vector Prediction (AMVP) technology.

A diamond search (i.e., the above first diamond search) may be performed based on the determined initial point. A search step size is incremented by i^{th} power of 2, where i is a natural number, 0≤i≤N, and N is a positive integer greater than 1. The specific value of N may be determined according to an actual requirement, which is generally 6. Correspondingly, the search may be performed according to search step sizes of 1, 2, 4, 8, 16, 32 and 64 respectively.

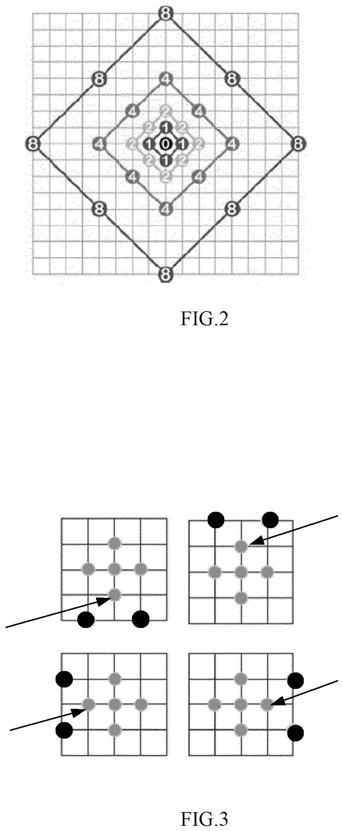

FIG. 2 is a schematic template diagram of a diamond search according to the present disclosure. As shown in FIG. 2, in order to simplify the drawing, only the search step size of 8 is shown. The actual search step size is generally up to 64, and 0 in the figure represents an initial point.

A point with the lowest rate distortion cost may be selected as a search result through the diamond search. That is, a found optimal point is obtained. To be distinguished from other subsequent optimal points, the optimal point may be called a first optimal point, similar to the expressions of the first distance and so on.

Further, a first distance between the first optimal point and the initial point may be acquired. If the first distance is equal to 0, that is, the first optimal point is an initial point, a motion vector corresponding to the initial point may be directly taken as a required optimal motion vector, and the processing is ended.

In one embodiment of the present disclosure, the first processing may be performed if it is determined according to the first optimal point that the diamond search is required again.

In one embodiment of the present disclosure, it may be determined that the diamond search is required again if the first distance is greater than 1. The first distance being greater than 1 can be further divided into two cases. In one case, the first distance is greater than 1 but less than a predetermined threshold. In the other case, the first distance is greater than or equal to the predetermined threshold. The specific value of the predetermined threshold may be determined according to an actual requirement.

In one embodiment of the present disclosure, a two-point search may be performed for the first optimal point to obtain a found fourth optimal point if the first distance is equal to 1, and it may also be determined that the diamond search is required again if the fourth optimal point and the first optimal point are different points. In addition, if the fourth optimal point and the first optimal point are same points, the motion vector corresponding to the first optimal point may be taken as the required optimal motion vector, and the processing is ended. How to determine the motion vector corresponding to the first optimal point is a prior art.

If it is determined that the diamond search is required again, the first processing may be performed: acquiring an updated initial point, and acquiring an optimization range, the optimization range being less than 2*^{N}* ; performing a diamond search (i.e., the second diamond search) according to the initial point, wherein, prior to a search with a search step size larger than the optimization range, if it is determined that an ending condition is met, the diamond search is ended and a second optimal point corresponding to the diamond search is determined; and a required optimal motion vector is determined according to the second optimal point if the second optimal point meets a predetermined requirement, and otherwise, the first processing is repeated.

In one embodiment of the present disclosure, if it is determined that a second distance between the second optimal point and the initial point is equal to 1, it may be considered that the second optimal point meets the predetermined requirement. Correspondingly, the required optimal motion vector may be determined according to the second optimal point, and the processing is ended. If it is determined that the second distance is greater than 1, the first processing may be repeated.

The specific implementation of the first processing may vary according to different reasons that lead to the need to perform the diamond search again, as introduced below respectively.

### 1) Manner 1

If the first distance is greater than or equal to the predetermined threshold, a raster search may be performed in a predetermined range with the first optimal point as a center to obtain a found third optimal point, namely the point with the lowest rate distortion cost, the third optimal point may be taken as the updated initial point, a third distance between the third optimal point and the initial point prior to update may be acquired, and a smaller value of the third distance and 2*^{M}* is taken as the optimization range. M is a positive integer greater than 1, and M is less than N. The specific value of M may be determined according to an actual requirement.

The updated initial point and the optimization range may be obtained through the above processing.

Then, the diamond search may be performed according to the initial point. Prior to a search with a search step size larger than the optimization range, if it is determined that an ending condition is met, the diamond search is ended and a second optimal point corresponding to the diamond search is determined; and a required optimal motion vector is determined according to the second optimal point if a second distance between the second optimal point and the initial point is equal to 1, and the processing is ended; the first processing may be repeated if it is determined that the second distance is greater than 1.

In one embodiment of the present disclosure, it may be determined that the ending condition is met if it is determined that the optimal point corresponding to each performed search does not change. Correspondingly, the optimal point corresponding to each performed search may be taken as the second optimal point corresponding to the diamond search.

In one embodiment of the present disclosure, each search with a search step size larger than the optimization range may be performed to obtain the second optimal point corresponding to the diamond search if it is determined that the optimal point corresponding to each performed search changes.

In one embodiment of the present disclosure, the second optimal point may be taken as the updated initial point, and a smaller value of the second distance and 2*^{M}* may be taken as the optimization range when the first processing is repeated.

In an existing diamond search manner, the search can be ended only after being performed for each search step size. However, after the manner according to the present disclosure is adopted, an optimization range may be determined by using a distance between an optimal point obtained previously and a corresponding initial point. Correspondingly, when next diamond search is performed, the diamond search may be ended in advance if it is determined according to search results prior to the optimization range that an ending condition is met. That is, if the optimal point corresponding to each performed search does not change, it indicates that the optimal point is probably the optimal point finally required, so that subsequent searches can be skipped, thereby reducing redundant searches. That is, the number of search points is reduced, and then the efficiency of search is improved. If the ending condition is not met, the subsequent searches may be continued, and a larger range of search may be continued, which is compatible with the existing diamond search manner and ensures the accuracy of the optimal point obtained.

The above process may be illustrated as follows.

Assuming that the value of M is 3 and the value of N is 6, and assuming that the third distance is 6, the smaller value of the third distance and 2*^{M}* (i.e., 8) is 6. Correspondingly, 6 may be taken as the optimization range, and a diamond search may be performed according to the updated initial point, that is, the third optimal point.

During the diamond search, firstly, searches may be performed sequentially according to the search step size of 1, the search step size of 2 and the search step size of 4, from which it may be seen that the search step sizes are all smaller than the optimization range. Then, if it is determined that the optimal point corresponding to the 3 searches does not change, that is, the optimal point corresponding to each search is a same point, it may be determined that the ending condition is met, so that the diamond search can be ended, and the optimal point corresponding to the 3 searches may be taken as the second optimal point corresponding to the diamond search. If it is determined that the optimal point corresponding to the 3 searches changes, for example, the 3^{rd} search corresponds to a different optimal point than the first two searches, subsequent searches may be continued. That is, searches may be performed sequentially according to the search step size of 8, the search step size of 16, the search step size of 32 and the search step size of 64, so as to obtain the second optimal point corresponding to the diamond search.

If the second distance between the second optimal point and the initial point is equal to 1, the required optimal motion vector may be determined according to the second optimal point, and the processing is ended. For example, a two-point search may be performed for the second optimal point, the motion vector corresponding to the found optimal point is taken as the required optimal motion vector, and the processing is ended.

If the second distance between the second optimal point and the initial point is equal to 0, the second optimal point may be directly taken as the required optimal motion vector, and the processing is ended.

If the second distance between the second optimal point and the initial point is greater than 1, the first processing may be repeated. Correspondingly, the second optimal point may be taken as the updated initial point, and a smaller value of the second distance and 8 may be taken as the optimization range.

FIG. 3 is a schematic template diagram of a two-point search according to the present disclosure. As shown in FIG. 3, when the optimal points are the points indicated by the arrows in the figure, the two black points near the optimal points shown in the figure may be searched for separately.

In addition, as described above, if the first distance is greater than or equal to the predetermined threshold, a raster search may be performed in a predetermined range with the first optimal point as a center, to obtain a found third optimal point.

In one embodiment of the present disclosure, firstly, intensity of motion of a video as a processing object of the motion search may be determined; then, a raster step size corresponding to the intensity of motion may be determined, and the raster search may be performed according to the determined raster step size.

In one embodiment of the present disclosure, the raster step size corresponding to the intensity of motion may be determined according to a principle that the higher the intensity of motion, the smaller the raster step size.

In practical applications, the intensity of motion may be determined according to a Motion Vector Difference (MVD) of nearby coded blocks. For example, the intensity of motion may be divided into different grades, and each grade corresponds to a different value range. After the MVD is obtained, its value range may be determined, and then the grade corresponding to the value range may be used as the determined intensity of motion. In addition, each grade may correspond to a different raster step size. Accordingly, a required raster step size may be determined, and then the raster search may be performed according to the determined raster step size.

Generally, the larger the MVD, the higher the intensity of motion, that is, the more intense the motion. Conversely, the smaller the MVD, the slower the motion. The higher the intensity of motion, the smaller the corresponding raster step size.

Through the above processing, a larger raster step size may be used in the case of slow motion, so as to improve the search efficiency of the raster search, and a smaller step may be used in the case of intense motion, so as to prevent performance losses as much as possible.

### 2) Manner 2

The first optimal point may be taken as the updated initial point, and a smaller value of the first distance and 2*^{M}* may be taken as the optimization range if the first distance is greater than 1 but less than a predetermined threshold.

Then, a diamond search may be performed according to the initial point. Prior to a search with a search step size larger than the optimization range, if it is determined that the ending condition is met, the diamond search may be ended and a second optimal point corresponding to the diamond search may be determined. For example, if it is determined that the optimal point corresponding to each performed search does not change, it is determined that the ending condition is met. Correspondingly, the optimal point corresponding to each performed search may be taken as the second optimal point corresponding to the diamond search. If it is determined that the optimal point corresponding to each performed search changes, each search with a search step size larger than the optimization range may be performed to obtain the second optimal point corresponding to the diamond search.

If it is determined that the second distance between the second optimal point and the initial point is equal to 1, the required optimal motion vector may be determined according to the second optimal point, and the processing is ended. For example, a two-point search may be performed for the second optimal point, the motion vector corresponding to the found optimal point is taken as the required optimal motion vector, and the processing is ended.

If the second distance between the second optimal point and the initial point is equal to 0, the second optimal point may be directly taken as the required optimal motion vector, and the processing is ended.

If the second distance between the second optimal point and the initial point is greater than 1, the first processing may be repeated. The second optimal point may be taken as the updated initial point, and a smaller value of the second distance and 2*^{M}* may be taken as the optimization range.

### 3) Manner 3

A two-point search may be performed for the first optimal point to obtain a found fourth optimal point if the first distance is equal to 1, and it may be determined that the diamond search is required again if the fourth optimal point and the first optimal point are different points.

Correspondingly, the fourth optimal point may be taken as the updated initial point, a fourth distance between the fourth optimal point and the initial point prior to update may be acquired, and a smaller value of the fourth distance and 2*^{M}* may be taken as the optimization range.

Then, a diamond search may be performed according to the initial point. Prior to a search with a search step size larger than the optimization range, if it is determined that the ending condition is met, the diamond search may be ended and a second optimal point corresponding to the diamond search may be determined. For example, if it is determined that the optimal point corresponding to each performed search does not change, it is determined that the ending condition is met. Correspondingly, the optimal point corresponding to each performed search may be taken as the second optimal point corresponding to the diamond search. If it is determined that the optimal point corresponding to each performed search changes, each search with a search step size larger than the optimization range may be performed to obtain the second optimal point corresponding to the diamond search.

If it is determined that the second distance between the second optimal point and the initial point is equal to 1, the required optimal motion vector may be determined according to the second optimal point, and the processing is ended. For example, a two-point search may be performed for the second optimal point, the motion vector corresponding to the found optimal point is taken as the required optimal motion vector, and the processing is ended.

If the second distance between the second optimal point and the initial point is equal to 0, the second optimal point may be directly taken as the required optimal motion vector, and the processing is ended.

If the second distance between the second optimal point and the initial point is greater than 1, the first processing may be repeated. The second optimal point may be taken as the updated initial point, and a smaller value of the second distance and 2*^{M}* may be taken as the optimization range.

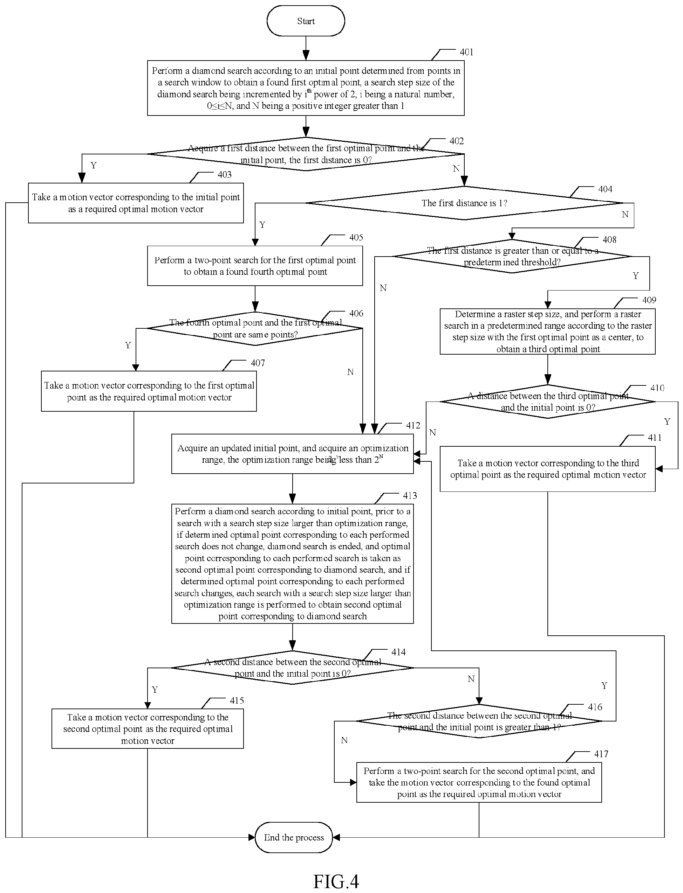

Based on the above introduction, FIG. 4 is a flowchart of an overall implementation process of the motion search according to the present disclosure. As shown in FIG. 4, the following specific implementations are included.

In step 401, a diamond search is performed according to an initial point determined from points in a search window to obtain a found first optimal point, a search step size of the diamond search being incremented by i^{th} power of 2, i being a natural number, 0≤i≤N, and N being a positive integer greater than 1.

In step 402, a first distance between the first optimal point and the initial point is acquired, and it is determined whether the first distance is 0. If yes, step 403 is performed. Otherwise, step 404 is performed.

In step 403, a motion vector corresponding to the initial point is taken as a required optimal motion vector, and then the process is ended.

In step 404, it is determined whether the first distance is 1. If yes, step 405 is performed. Otherwise, step 408 is performed.

In step 405, a two-point search is performed for the first optimal point to obtain a found fourth optimal point.

In step 406, it is determined whether the fourth optimal point and the first optimal point are same points. If yes, step 407 is performed. Otherwise, step 412 is performed.

In step 407, a motion vector corresponding to the first optimal point is taken as the required optimal motion vector, and then the process is ended.

In step 408, it is determined whether the first distance is greater than or equal to a predetermined threshold. If yes, step 409 is performed. Otherwise, step 412 is performed.

In step 409, a raster step size is determined, and a raster search is performed in a predetermined range according to the raster step size with the first optimal point as a center, to obtain a third optimal point.

For example, intensity of motion of a video as a processing object of the motion search may be determined, and a raster step size corresponding to the intensity of motion may be determined.

The raster step size corresponding to the intensity of motion may be determined according to a principle that the higher the intensity of motion, the smaller the raster step size.

The specific value of the predetermined range may be determined according to an actual requirement.

In step 410, it is determined whether a distance between the third optimal point and the initial point is 0. If yes, step 411 is performed. Otherwise, step 412 is performed.

In step 411, a motion vector corresponding to the third optimal point is taken as the required optimal motion vector, and then the process is ended.

In step 412, an updated initial point is acquired, and an optimization range is acquired, the optimization range being less than 2*^{N}* .

Correspondingly, the third optimal point may be taken as the updated initial point, a third distance between the third optimal point and the initial point prior to update may be acquired, and a smaller value of the third distance and 2*^{M}* may be taken as the optimization range.

Alternatively, the first optimal point may be taken as the updated initial point, and a smaller value of the first distance and 2*^{M}* may be taken as the optimization range.

Alternatively, the fourth optimal point may be taken as the updated initial point, a fourth distance between the fourth optimal point and the initial point prior to update may be acquired, and a smaller value of the fourth distance and 2*^{M}* may be taken as the optimization range.

In step 413, a diamond search may be performed according to the initial point, wherein, prior to a search with a search step size larger than the optimization range, if it is determined that the optimal point corresponding to each performed search does not change, the diamond search is ended, and the optimal point corresponding to each performed search is taken as the second optimal point corresponding to the diamond search, and if it is determined that the optimal point corresponding to each performed search changes, each search with a search step size larger than the optimization range is performed to obtain the second optimal point corresponding to the diamond search.

In step 414, it is determined whether a second distance between the second optimal point and the initial point is 0. If yes, step 415 is performed. Otherwise, step 416 is performed.

In step 415, a motion vector corresponding to the second optimal point is taken as the required optimal motion vector, and then the process is ended.

In step 416, it is determined whether the second distance between the second optimal point and the initial point is greater than 1. If yes, step 417 is performed. Otherwise, step 412 is performed.

That is, when the second distance is equal to 1, step 417 may be performed. When the second distance is greater than 1, step 412 may be repeated. The second optimal point may be taken as the updated initial point, and a smaller value of the second distance and 2*^{M}* may be taken as the optimization range.

In step 417, a two-point search may be performed for the second optimal point, the motion vector corresponding to the found optimal point is taken as the required optimal motion vector, and the process is ended.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. In addition, those skilled in the art should also appreciate that all the embodiments described in the specification are preferred embodiments, and the related actions and modules are not necessarily mandatory to the present disclosure. In addition, the parts not detailed in one embodiment may be obtained with reference to the relevant descriptions in other embodiments.

In short, by use of the solution in the method embodiment of the present disclosure, an optimization range may be set to end a diamond search in advance when a predetermined condition is met, and a raster step size may be reasonably set according to the intensity of motion, thereby reducing redundant searches, improving the efficiency of search, and correspondingly improving the video coding efficiency.

The above is the introduction to the method embodiment. The following is a further illustration of the solution according to the present disclosure through an apparatus embodiment.

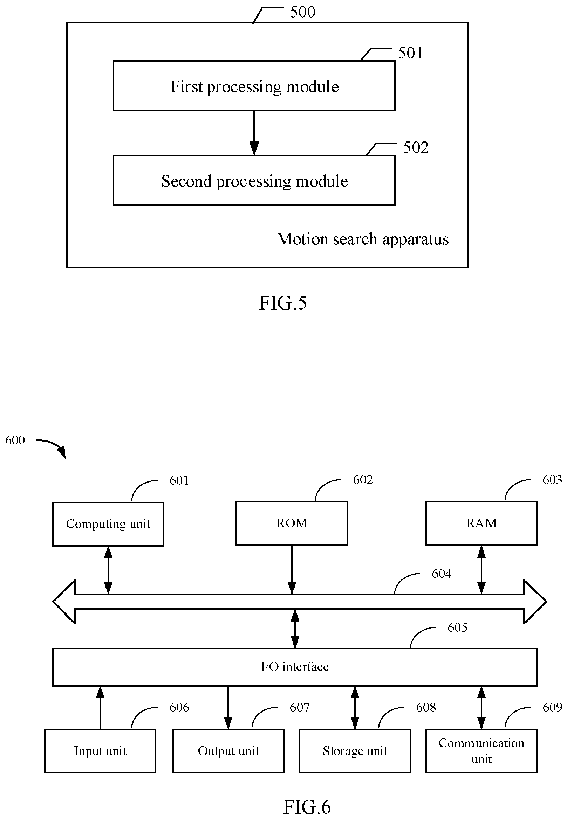

FIG. 5 is a schematic diagram of a composition structure of an embodiment of a motion search apparatus 500 according to the present disclosure. As shown in FIG. 5, the apparatus includes a first processing module 501 and a second processing module 502.

The first processing module 501 is configured to perform a first diamond search according to an initial point determined from points in a search window. A search step size is incremented by i^{th} power of 2, i is a natural number, 0≤i≤N, and N is a positive integer greater than 1.

The second processing module 502 is configured to perform the following first processing: acquiring an updated initial point, and acquiring an optimization range, the optimization range being less than 2*^{N}* ; performing a second diamond search according to the initial point, wherein prior to a search with a search step size larger than the optimization range, if it is determined that a predetermined ending condition is met, the diamond search is ended and a second optimal point corresponding to the diamond search is determined; and determine a required optimal motion vector according to the second optimal point if the second optimal point meets a predetermined requirement, and otherwise, repeat the first processing.

By use of the solution in the apparatus embodiment, an optimization range may be set to end a diamond search in advance when a predetermined condition is met, thereby reducing redundant searches. That is, the number of search points is reduced, and then the efficiency of search is improved.

In one embodiment of the present disclosure, the first processing module 501 may further acquire a first optimal point found by the first diamond search. Correspondingly, the second processing module 502 may perform the first processing if it is determined according to the first optimal point that the diamond search is required again.

In one embodiment of the present disclosure, the second processing module 502 may acquire a first distance between the first optimal point and the initial point prior to update, and determine that the diamond search is required again if the first distance is greater than 1.

Specifically, in one embodiment of the present disclosure, the second processing module 502 may take the first optimal point as the updated initial point, and take a smaller value of the first distance and 2*^{M}* as the optimization range when the first distance is greater than 1 but less than a predetermined threshold. In addition, the second processing module 502 may perform a raster search in a predetermined range with the first optimal point as a center, to obtain a found third optimal point, take the third optimal point as the updated initial point, acquire a third distance between the third optimal point and the initial point prior to update, and take a smaller value of the third distance and 2*^{M}* as the optimization range when the first distance is greater than or equal to the predetermined threshold. M is a positive integer greater than 1, and M is less than N.

In one embodiment of the present disclosure, the second processing module 502 may determine intensity of motion of a video as a processing object of the motion search, may determine a raster step size corresponding to the intensity of motion, and then may perform the raster search according to the determined raster step size.

In one embodiment of the present disclosure, the second processing module 502 may determine the raster step size corresponding to the intensity of motion according to a principle that the higher the intensity of motion, the smaller the raster step size.

In one embodiment of the present disclosure, after acquiring the first distance between the first optimal point and the initial point prior to update, the second processing module 502 may perform a two-point search for the first optimal point to obtain a found fourth optimal point if the first distance is equal to 1, and may also determine that the diamond search is required again if the fourth optimal point and the first optimal point are different points.

Correspondingly, in one embodiment of the present disclosure, the second processing module 502 may take the fourth optimal point as the updated initial point, acquire a fourth distance between the fourth optimal point and the initial point prior to update, and take a smaller value of the fourth distance and 2*^{M}* as the optimization range.

In one embodiment of the present disclosure, the second processing module 502 may determine that the ending condition is met if it is determined that the optimal point corresponding to each performed search does not change, and may take the optimal point corresponding to each performed search as the second optimal point corresponding to the diamond search.

In one embodiment of the present disclosure, the second processing module 502 may perform each search with a search step size larger than the optimization range to obtain the second optimal point corresponding to the diamond search if it is determined that the optimal point corresponding to each performed search changes.

In one embodiment of the present disclosure, the second processing module 502 may determine the required optimal motion vector according to the second optimal point when it is determined that the second distance between the second optimal point and the initial point is equal to 1, and repeat the first processing when it is determined that the second distance is greater than 1.

In one embodiment of the present disclosure, the second processing module 502 may take the second optimal point as the updated initial point, and take a smaller value of the second distance and 2*^{M}* as the optimization range when repeating the first processing.

The specific work flow of the apparatus embodiment shown in FIG. 5 may be obtained with reference to the related description in the foregoing method embodiment, which is not described in detail.

The solution according to the present disclosure may be applied to the field of artificial intelligence, and in particular, to the field such as computer vision and cloud computing. Artificial intelligence is a discipline that studies how to make computers simulate certain thinking processes and intelligent behaviors (such as learning, reasoning, thinking and planning) of human beings, which includes hardware technologies and software technologies. The artificial intelligence hardware technologies generally include sensors, dedicated artificial intelligence chips, cloud computing, distributed storage, big data processing and other technologies. The artificial intelligence software technologies mainly include a computer vision technology, a speech recognition technology, a natural language processing technology, machine learning/deep learning, a big data processing technology, a knowledge graph technology and other major directions.

In addition, acquisition, storage, use, processing, transmission, provision and disclosure of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

FIG. 6 is a schematic block diagram of an electronic device 600 configured to implement embodiments of the present disclosure. The electronic device is intended to represent various forms of digital computers, such as laptops, desktops, workbenches, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the device 600 includes a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the device 600. The computing unit 601, the ROM 602 and the RAM 603 are connected to one another by a bus 604. An input/output (I/O) interface 605 is also connected to the bus 604.

A plurality of components in the device 600 are connected to the I/O interface 605, including an input unit 606, such as a keyboard and a mouse; an output unit 607, such as various displays and speakers; a storage unit 608, such as disks and discs; and a communication unit 609, such as a network card, a modem and a wireless communication transceiver. The communication unit 609 allows the device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 601 performs the methods and processing described above, such as the method according to the present disclosure. For example, in some embodiments, the method according to the present disclosure may be implemented as a computer software program that is tangibly embodied in a machine-readable medium, such as the storage unit 608. In some embodiments, part or all of a computer program may be loaded and/or installed on the device 600 via the ROM 602 and/or the communication unit 609. One or more steps of the method according to the present disclosure described above may be performed when the computer program is loaded into the RAM 603 and executed by the computing unit 601. Alternatively, in other embodiments, the computing unit 601 may be configured to perform the method according to the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

## Claims

1. A motion search method, comprising:
performing (101) a first diamond search according to an initial point determined from points in a search window, a search step size being incremented by i^{th} power of 2, i being a natural number, 0≤i≤N, and N being a positive integer greater than 1; and
performing (102) the following first processing: acquiring (103) an updated initial point, and acquiring an optimization range, the optimization range being less than 2*^{N}*; performing (104) a second diamond search according to the initial point, wherein, prior to a search with a search step size larger than the optimization range, if it is determined that a predetermined ending condition is met, the diamond search is ended and a second optimal point corresponding to the diamond search is determined; and determining (105) a required optimal motion vector according to the second optimal point if the second optimal point meets a predetermined requirement, and otherwise, repeating the first processing.

2. The method according to claim 1, further comprising:
acquiring a first optimal point found by the first diamond search; and
performing the first processing if it is determined according to the first optimal point that the diamond search is required again.

3. The method according to claim 2, wherein the step of determining according to the first optimal point that the diamond search is required again comprises:
acquiring a first distance between the first optimal point and the initial point prior to update; and
determining that the diamond search is required again if the first distance is greater than 1.

4. The method according to claim 3, wherein the step of acquiring an updated initial point, and acquiring an optimization range comprises:
taking the first optimal point as the updated initial point, and taking a smaller value of the first distance and 2*^{M}* as the optimization range if the first distance is greater than 1 but less than a predetermined threshold; and
performing a raster search in a predetermined range with the first optimal point as a center to obtain a found third optimal point, taking the third optimal point as the updated initial point, acquiring a third distance between the third optimal point and the initial point prior to update, and taking a smaller value of the third distance and 2*^{M}* as the optimization range if the first distance is greater than or equal to the predetermined threshold, M being a positive integer greater than 1, and M being less than N.

5. The method according to claim 4, wherein the raster search comprises:
determining intensity of motion of a video as a processing object of the motion search;
determining a raster step size corresponding to the intensity of motion; and
performing the raster search according to the raster step size.

6. The method according to claim 5, wherein the step of determining a raster step size corresponding to the intensity of motion comprises:
determining the raster step size corresponding to the intensity of motion according to a principle that the higher the intensity of motion, the smaller the raster step size.

7. The method according to claim 2, wherein the step of determining according to the first optimal point that the diamond search is required again comprises:
acquiring a first distance between the first optimal point and the initial point prior to update;
performing a two-point search for the first optimal point to obtain a found fourth optimal point if the first distance is equal to 1; and
determining that the diamond search is required again if the fourth optimal point and the first optimal point are different points.

8. The method according to claim 7, wherein the step of acquiring an updated initial point, and acquiring an optimization range comprises:
taking the fourth optimal point as the updated initial point, acquiring a fourth distance between the fourth optimal point and the initial point prior to update, and taking a smaller value of the fourth distance and 2*^{M}* as the optimization range, M being a positive integer greater than 1, and M being less than N.

9. The method according to any one of claims 1-8, wherein
the step of determining that a predetermined ending condition is met comprises: determining that the ending condition is met if it is determined that the optimal point corresponding to each performed search does not change; and
the step of determining a second optimal point corresponding to the diamond search comprises: taking the optimal point corresponding to each performed search as the second optimal point corresponding to the diamond search.

10. The method according to claim 9, wherein
the first processing further comprises: performing each search with a search step size larger than the optimization range to obtain the second optimal point corresponding to the diamond search if it is determined that the optimal point corresponding to each performed search changes.

11. The method according to any one of claims 1-8, wherein the step of determining a required optimal motion vector according to the second optimal point if the second optimal point meets a predetermined requirement, and otherwise, repeating the first processing comprises:
determining the optimal motion vector according to the second optimal point if it is determined that a second distance between the second optimal point and the initial point is equal to 1, and repeating the first processing if it is determined that the second distance is greater than 1.

12. A motion search apparatus (500), comprising:
a first processing module (501) configured to perform a first diamond search according to an initial point determined from points in a search window, a search step size being incremented by i^{th} power of 2, i being a natural number, 0≤i≤N, and N being a positive integer greater than 1; and
a second processing module (502) configured to perform the following first processing: acquiring an updated initial point, and acquiring an optimization range, the optimization range being less than 2*^{N}*; performing a second diamond search according to the initial point, wherein prior to a search with a search step size larger than the optimization range, if it is determined that a predetermined ending condition is met, the diamond search is ended and a second optimal point corresponding to the diamond search is determined; and determine a required optimal motion vector according to the second optimal point if the second optimal point meets a predetermined requirement, and otherwise, repeat the first processing.

13. An electronic device, comprising:
at least one processor; and
a memory in communication connection with the at least one processor; wherein
the memory stores instructions executable by the at least one processor, and the instructions are executed by the at least one processor to enable the at least one processor to perform the method according to any one of claims 1-11.

14. Anon-transitory computer-readable storage medium storing computer instructions which, when executed by a computer, cause the computer to perform the method according to any one of claims 1-11.

15. A computer program product, comprising computer programs/instructions, wherein, when the computer programs/instructions are executed by a processor, the method according to any one of claims 1-11 is performed.
